# EUROPEAN PATENT SPECIFICATION

(11) **EP 3 715 231 B1**
(45) Date of publication and mention of the grant of the patent: **10.11.2021**
(21) Application number: 20159614.5
(22) Date of filing: 26.02.2020
(51) Int. Cl.: B62J 6/26, B62J 6/026, B62J 17/02, F21S 43/14, F21S 43/19, F21S 43/20, F21S 43/31, F21S 43/40, F21W 103/10

(54) **SADDLE RIDING VEHICLE COMPRISING A LIGHT DEVICE**
SATTELFAHRZEUG UMFASSEND EINE LICHTVORRICHTUNG
VÉHICULE À SELLE COMPRENANT UN DISPOSITIF D'ÉCLAIRAGE

(30) Priority: 29.03.2019 JP 2019065644
(43) Date of publication of application: 30.09.2020
(73) Proprietor: HONDA MOTOR CO., LTD, Minato-ku Tokyo 107-8556 (JP)
(72) Inventor: TSUCHIYA, Yosuke, Wako-shi, Saitama 351-0193 (JP); HANAI, Koji, Wako-shi, Saitama 351-0193 (JP)
(74) Representative: Dehns

(56) References cited:
- EP-A1- 3 006 314
- EP-A2- 1 182 395
- DE-A1-102014 210 580
- JP-A- 2009 067 134
- TW-U- M 356 646
- US-A1- 2017 254 497

## Description

The present invention relates to a saddle riding vehicle comprising a light device.

There has been conventionally known a position light that has an elongate contour as a light device of a saddle riding vehicle (for example, see JP 2010 165583 A).

Depending on a lens surface of the light device, a way of emitting in which strengths of lights are not changed much at respective portions, what is called a surface emission, is applied in some cases. When such a surface emission is applied, the strengths of the lights entering the lens preferably do not change, and further the lights at respective portions are preferably collimated lights.

In JP-A No. 2010-165583, since a light source is disposed at a center portion in a longitudinal direction of the light device, a length of an optical path reaching an end portion in the longitudinal direction of the lens gets longer than a length of an optical path reaching the center portion in the longitudinal direction of the lens. Thus, it is difficult to adjust the strength of the lights entering the respective portions of the lens to be uniform due to diffusion of the lights. Although the strengths of the lights can be adjusted with a cut of a reflector, it is very difficult to align the strengths of the lights at respective portions of the reflector and is very difficult to create the collimated lights simultaneously. Accordingly, the light device is preferred to include a lens surface in an elongated shape with a relatively simple configuration to ensure the surface emission.

With respect to the subject-matter of appended claim 1, DE 10 2014 210580 A1 discloses a light device for a vehicle, the light device comprising: a light source; a lens having an elongated shape; a first reflecting surface reflecting a light emitted from the light source; and a second reflecting surface reflecting a light reflected by the first reflecting surface onto the lens, the first reflecting surface having a curvature determined to cause the light from the light source to make a diffusion range in a first direction wider than a diffusion range in a second direction, the first direction corresponding to a longitudinal direction of the elongated shape of the lens, the second direction corresponding to a direction perpendicular to the longitudinal direction of the elongated shape, the second reflecting surface irradiating the lens with the light from respective portions of the first reflecting surface reflected in parallel to one another, a distance L1 from the light source to the first reflecting surface being set to be shorter than a distance L3 from the second reflecting surface to the lens.

An object of the present invention is to provide a light device that ensures surface emission by diffusing the lights in an elongated shape with a simple configuration to create collimated lights.

The invention is set out in the appended set of claims.

A saddle riding vehicle according to appended claim 1 comprises a light device, the light device comprising: a light source; a lens having an elongated shape; a first reflecting surface reflecting a light emitted from the light source; and a second reflecting surface reflecting a light reflected by the first reflecting surface onto the lens, the first reflecting surface having a curvature determined to cause the light from the light source to make a diffusion range in a first direction wider than a diffusion range in a second direction, the first direction corresponding to a longitudinal direction of the elongated shape of the lens, the second direction corresponding to a direction perpendicular to the longitudinal direction of the elongated shape, the second reflecting surface irradiating the lens with the light from respective portions of the first reflecting surface reflected in parallel to one another, wherein the light device is disposed inside a handlebar cover that covers a steering handlebar of the saddle riding vehicle, the light device having the longitudinal direction of the lens disposed in a manner extending in a vehicle width direction at a lower portion inside the handlebar cover, a distance L1 from the light source to the first reflecting surface being set to be shorter than a distance L3 from the second reflecting surface to the lens, and an upper portion of the handlebar cover with respect to the lens being formed on an inclined surface inclined upwardly toward a rear.

In the above configuration, a distance L2 from the first reflecting surface to the second reflecting surface may be set to be longer than the distance L1 from the light source to the first reflecting surface.

Additionally, in the above configuration, the light device of the saddle riding vehicle may be configured as follows. The light device reflects the light emitted rearward from the light source to a direction perpendicular to the longitudinal direction of the lens in a front view by the first reflecting surface, and subsequently causes the light to be reflected forward by the second reflecting surface and to reach the lens.

Additionally, in the above configuration, the light device of the saddle riding vehicle may be configured as follows. The light device is disposed ahead of a meter device disposed inside the handlebar cover. The light source and the first reflecting surface are at least in part disposed within a range of a height H of the meter device.

According to the invention defined in appended claim 1, at least two kinds of reflecting surfaces can be used to create collimated lights diffusing in an elongated shape, allowing the light device to perform a surface emission with a simple configuration.

In the above optional configuration in which the distance L2 from the first reflecting surface to the second reflecting surface is set to be longer than the distance L1 from the light source to the first reflecting surface, the lights can be effectively diffused in the elongated shape even with a size of the first reflecting surface decreased.

Additionally, in the above optional configuration in which the light device reflects the lights emitted rearward from the light source to a direction perpendicular to the longitudinal direction of the lens in a front view by the first reflecting surface, and in which the light device subsequently causes the light to be reflected forward by the second reflecting surface and to reach the lens, the light device can be downsized and configured compactly in a front-rear direction compared with a light device irradiating a front side with lights from a light source.

According to the invention defined in appended claim 1, forming the upper portion of the handlebar cover with respect to the lens to be the inclined surface inclined upwardly toward the rear allows for reducing air resistance. In addition, since the light device is disposed so as to fit the shape of the inclined surface, the handlebar cover can be configured compactly.

Additionally, in the above optional configuration in which the light device is disposed ahead of a meter device disposed inside the handlebar cover, and in which the light source and the first reflecting surface are at least in part disposed within the range of the height H of the meter device, since the meter device can be disposed using the short distance L1 between the light source and the first reflecting surface, the handlebar cover can be configured compactly.

An embodiment of the invention will now be described by way of example and with reference to the accompanying drawings.
FIG. 1 is a front view illustrating a front upper portion of a motorcycle including a position light according to an embodiment of the present invention.
FIG. 2 is a cross-sectional view taken along the line II-II in FIG. 1.
FIG. 3 is a cross-sectional view taken along the line III-III in FIG. 2.
FIG. 4 is a cross-sectional view taken along the line IV-IV in FIG. 2.
FIG. 5 is a cross-sectional view taken along the line V-V in FIG. 2.

The following describes one embodiment of the present invention with reference to drawings. In the description, descriptions on directions such as front and rear, left and right, and upper and lower are identical to directions with respect to a vehicle body insofar as descriptions are not particularly given. A reference sign FR illustrated in each drawing indicates a front side of the vehicle body, a reference sign UP indicates an upper side of the vehicle body, and a reference sign LH indicates a left side of the vehicle body.

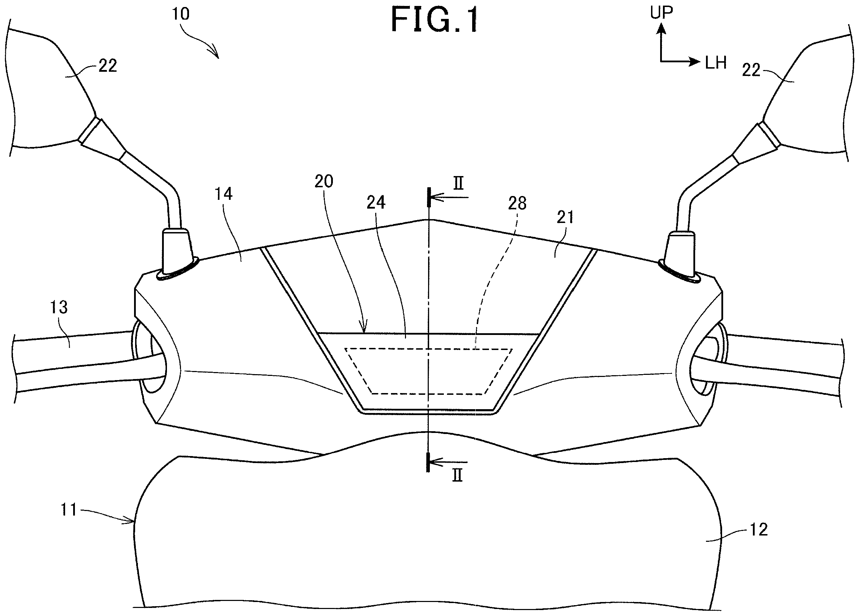

FIG. 1 is a front view illustrating a front upper portion of a motorcycle 10 including a position light 20 according to an embodiment of the present invention.

The motorcycle 10 includes a body frame, a front fork steerably supported by a front end portion of the body frame, and a vehicle body cover 11 that covers the body frame and the front fork.

The vehicle body cover 11 includes a front cover 12 and a handlebar cover 14. The front cover 12 covers upper portions of the body frame and the front fork from the front side. The handlebar cover 14 covers a center portion of a steering handlebar 13 mounted on an upper end portion of a steering shaft that constitutes the front fork.

The handlebar cover 14 is provided with the position light 20, an upper cover 21 covering the position light 20 from the upper side, and a right and left pair of rearview mirrors 22. In the handlebar cover 14, the position light 20 is arranged at a lower portion of the center portion, the upper cover 21 is arranged at an upper portion of the center portion, and the right and left pair of rearview mirrors 22 are arranged at the right and left upper portions.

The position light 20 includes an outer lens 24 that forms a front face, and emits lights toward the front side of the vehicle to allow pedestrians and oncoming vehicles to easily recognize a position of a host vehicle.

The upper cover 21 constitutes a part of the handlebar cover 14.

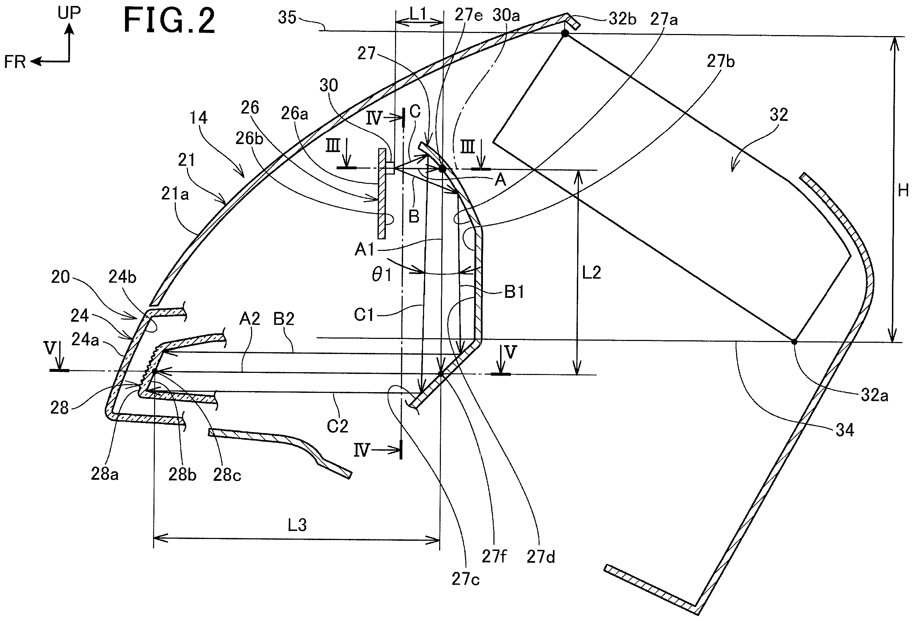

FIG. 2 is a cross-sectional view taken along the line II-II in FIG. 1, and illustrates a cross-sectional surface at a position of a vehicle body centerline that passes through a center in a vehicle width direction.

The position light 20 includes a board 26, a reflector 27, an inner lens 28, and the outer lens 24, each mounted inside the handlebar cover 14.

The board 26 is mounted with a light-emitting diode (LED) 30 as a light source, and the LED 30 constitutes a part of the position light 20. The LED 30 has an optical axis 30a extending rearward horizontally or approximately horizontally from the LED 30.

The reflector 27 includes a first reflecting surface 27a formed at the upper portion, a connection surface 27b extending downward from a lower edge of the first reflecting surface 27a, and a second reflecting surface 27c disposed underneath the connection surface 27b.

The inner lens 28 is formed in an elongated shape in the vehicle width direction (see FIG. 1), and disposed rearward at a distance inside the outer lens 24. The inner lens 28 has a front face 28a that is provided with a fine and uniform lens cut.

At a rear side of the reflector 27 inside the handlebar cover 14, a meter device 32 is disposed.

The upper cover 21 covers the board 26, the LED 30, an upper portion of the reflector 27, and the meter device 32 from the front side. The upper cover 21 has a front face 21a having an inclined surface inclined upwardly toward a rear (specifically, a curved surface becoming convex upwardly and obliquely forward). Air resistance of the handlebar cover 14 is reduced by the front face 21a.

The position light 20 is disposed ahead of the meter device 32.

A horizontal line 34 that passes through a lower end 32a of the meter device 32 and a horizontal line 35 that passes through an upper end 32b of the meter device 32 are drawn. At least the first reflecting surface 27a of the reflector 27, the board 26, and the LED 30 are positioned within a range of a height H from the lower end 32a to the upper end 32b.

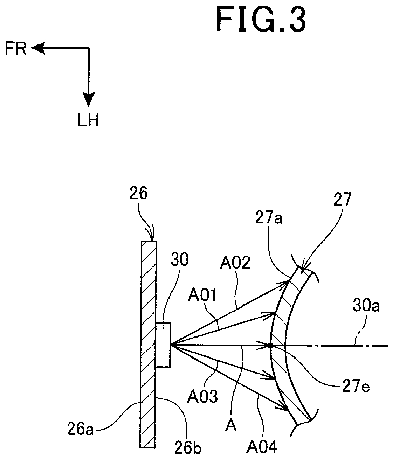

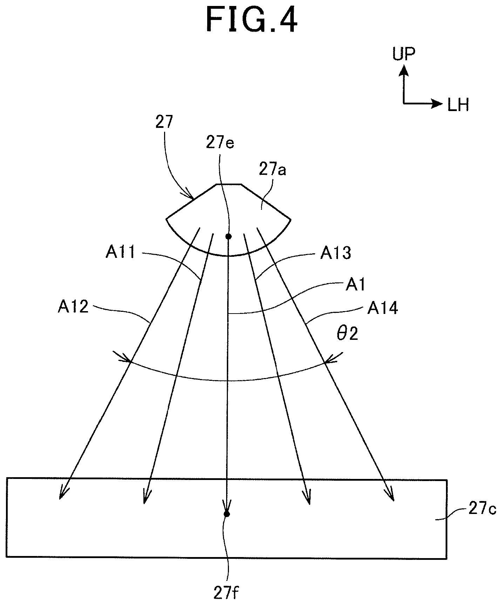

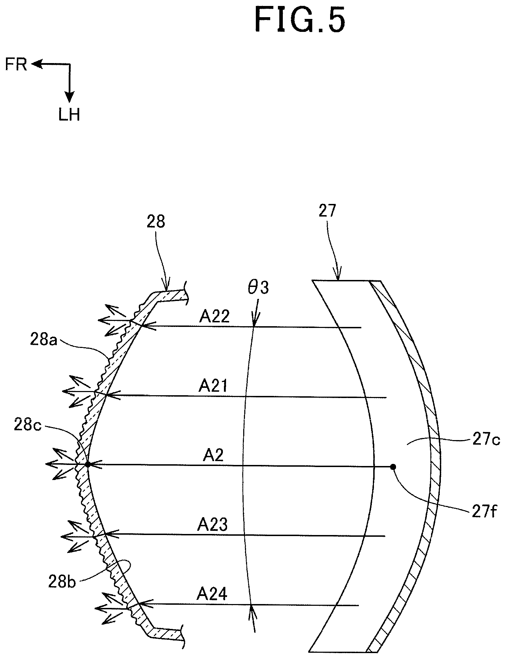

FIG. 3 is a cross-sectional view taken along the line III-III in FIG. 2, and illustrates a cross-sectional surface that passes through the optical axis 30a of the LED 30 and extends to right and left of the position light 20. FIG. 4 is a cross-sectional view taken along the line IV-IV in FIG. 2, and illustrates a cross-sectional surface that intersects perpendicularly or approximately perpendicularly with the optical axis 30a of the LED 30 between the LED 30 and the reflector 27. The cross-sectional surface is parallel or approximately parallel to a light A1. FIG. 5 is a cross-sectional view taken along the line V-V in FIG. 2, and illustrates a cross-sectional surface that is parallel or approximately parallel to the optical axis 30a of the LED 30. The cross-sectional surface is cut on a light A2.

As illustrated in FIG. 2, the board 26 vertically extends, and has a front face 26a and a back face 26b oriented in a vehicle front-rear direction.

The LED 30 is mounted on the upper portion of the back face 26b of the board 26, and the optical axis 30a of the LED 30 extends rearward of the vehicle from the LED 30.

The first reflecting surface 27a of the reflector 27 is formed at the upper portion of a front face 27d of the reflector 27, and is disposed at a rear side of the LED 30.

Additionally, the first reflecting surface 27a has a concave surface that becomes convex rearward and obliquely upward on the cross-sectional surface taken along the line II-II (see FIG. 2), and has a convex surface that becomes convex forward on the cross-sectional surface taken along the line III-III (see FIG. 3) .

The second reflecting surface 27c of the reflector 27 has a concave surface becoming convex rearward that is formed at a lower portion of the front face 27d of the reflector 27, and is disposed underneath the first reflecting surface 27a.

The inner lens 28 is disposed ahead of the second reflecting surface 27c.

The outer lens 24 is transparent, and is not provided with a lens cut on a front face 24a and a back face 24b of the outer lens 24.

A distance in a front-rear direction from the LED 30 to a point 27e on the first reflecting surface 27a irradiated with a light on the optical axis 30a is defined as L1. A distance from the point 27e to a point 27f on the second reflecting surface 27c irradiated with a light reflected at the point 27e on the first reflecting surface 27a is defined as L2. A distance from the point 27f to a point 28c on a back face 28b of the inner lens 28 irradiated with a light reflected at the point 27f on the second reflecting surface 27c is defined as L3.

The above-described distances L1, L2, and L3 have a magnitude relationship of L1 < L2, and L1 < L3.

Regarding the position light 20 described above, the following describes how lights travel based on FIG. 2 and FIG. 3 to FIG. 5.

In FIG. 2, a light A irradiated from the LED 30 travels rearward on the optical axis 30a, and reaches the point 27e on the first reflecting surface 27a of the reflector 27. Lights B, and C irradiated from the LED 30 respectively travel rearward and obliquely downward, and rearward and obliquely upward, and reach a lower side and an upper side with respect to the point 27e on the first reflecting surface 27a of the reflector 27. The above-described lights A, B, and C represent lights irradiated from the LED 30.

The lights A, B, and C are reflected by the first reflecting surface 27a, and become lights A1, B1, and C1, respectively to travel downward. The light A1 reaches the point 27f on the second reflecting surface 27c of the reflector 27, and the lights B1 and C1 reach a rear side and a front side with respect to the point 27f on the second reflecting surface 27c. At this time, a diffusion angle (diffusion range) in a front-rear direction of the lights B1 and C1 is defined as θ1.

The lights A1, B1, and C1 are reflected by the second reflecting surface 27c, and become lights A2, B2, and C2, respectively to travel forward. Then, the light A2 enters the inner lens 28 from the point 28c on the back face 28b, is refracted inside the inner lens 28, and is emitted from the front face 28a of the inner lens 28. The lights B2 and C2 enter the inner lens 28 from an upper side and a lower side with respect to the point 28c on the back face 28b, are refracted inside the inner lens 28, and are emitted from the front face 28a of the inner lens 28.

Further, the lights emitted from the front face 28a pass through the outer lens 24 to be irradiated ahead of the vehicle.

The following describes in detail how the above-described lights travel.

In FIG. 3, lights A01 and A03 irradiated from the LED 30 travel rearward and obliquely to lateral sides, at respective both sides of the optical axis 30a, and respectively reach a right lateral side and a left lateral side with respect to the point 27e on the first reflecting surface 27a of the reflector 27. Lights A02 and A04 irradiated from the LED 30 travel rearward and obliquely to lateral sides, at respective both sides of the optical axis 30a, and respectively reach a further right lateral side and a further left lateral side with respect to the lights A01 and A03 on the first reflecting surface 27a of the reflector 27. The above-described lights A01 to A04 represent the lights irradiated from the LED 30.

In FIG. 2 and FIG. 3, diffusion angles (diffusion ranges) of the lights A and A01 to A04 and the lights A, B, and C are approximately identical.

In FIG. 3 and FIG. 4, the lights A01 to A04 are reflected by the first reflecting surface 27a of the reflector 27 to become lights A11 to A14, and are headed for the second reflecting surface 27c at a lower side while being diffused. Assuming that the diffusion angle (diffusion range) in the vehicle width direction (right and left direction) of the lights A12 and A14 traveling downward from the first reflecting surface 27a is θ2, θ2 > θ1 (see FIG. 2).

In FIG. 4 and FIG. 5, the lights A11 to A14 are reflected by the second reflecting surface 27c of the reflector 27 to become lights A21 to A24, and travel forward.

The lights A2, A21 to A24, B2 (see, FIG. 2), and C2 (see FIG. 2) are parallel to one another (in FIG. 5, assuming that a diffusion angle (diffusion range) in the vehicle width direction of the lights A22 and A24 at respective portions is θ3, θ3 = 0), or approximately parallel to one another (for example, -10° < θ3 < 10°, preferably, -5° < θ3 < 5°). In short, it is only necessary for the inner lens 28 to perform a surface emission with the lights reflected at the respective portions of the second reflecting surface 27c as described in detail later.

The respective lights A2, A21 to A24, B2, and C2 traveling forward of the vehicle from the second reflecting surface 27c enter the inner lens 28 from the back face 28b, are refracted inside the inner lens 28, and are emitted from the front face 28a. At this time, the respective lights A2, A21 to A24, B2, and C2 are diffused to respective directions of a front of the inner lens 28 approximately evenly by a lens cut on the front face 28a, and have approximately identical brightness. Accordingly, the front face 28a of the inner lens 28 provides the so-called surface emission that is a way of emitting having little change in strengths of the lights all around when viewed from any angle.

As illustrated in the above FIG. 2, FIG. 4 and FIG. 5, the light device is the position light 20 that includes the LED 30 as the light source and the inner lens 28 as the lens in the laterally elongated shape.

The position light 20 includes the first reflecting surface 27a reflecting the lights emitted from the LED 30 and the second reflecting surface 27c reflecting the lights reflected by the first reflecting surface 27a onto the inner lens 28.

The first reflecting surface 27a has a curvature determined to cause the lights from the LED 30 to make the diffusion range (diffusion angle θ2) wider (θ2 > θ1) than the diffusion range (diffusion angle θ1). The diffusion range (diffusion angle θ2) is a diffusion range in a first direction (corresponds to the vehicle width direction in this embodiment) that corresponds to a longitudinal direction of the elongated shape of the inner lens 28. The diffusion range (diffusion angle θ1) is a diffusion range in a second direction (corresponds to the front-rear direction in this embodiment) that corresponds to a direction perpendicular to the longitudinal direction of the elongated shape.

The second reflecting surface 27c reflects the lights from the respective portions of the first reflecting surface 27a so that the lights each travel forward, and causes the inner lens 28 to perform the surface emission.

Since this configuration can create collimated lights diffused in the elongated shape using at least two kinds of the reflecting surfaces (the first reflecting surface 27a and the second reflecting surface 27c), the position light 20 can be configured to perform the surface emission with a simple configuration.

Additionally, as illustrated in FIG. 2, the distance L2 from the first reflecting surface 27a to the second reflecting surface 27c is set to be longer than the distance L1 from the LED 30 to the first reflecting surface 27a.

This configuration can effectively diffuse the lights in the elongated shape even with a size of the first reflecting surface 27a decreased.

The position light 20 also causes the lights emitted rearward from the LED 30 to be reflected downward by the first reflecting surface 27a. After that, the position light 20 causes the lights to be reflected forward by the second reflecting surface 27c and to reach the inner lens 28.

This configuration allows the position light 20 to be downsized and configured compactly in the front-rear direction in this embodiment, compared with a light device irradiating a front side with lights from a light source.

Additionally, as illustrated in FIG. 1 and FIG. 2, the position light 20 is disposed inside the handlebar cover 14 that covers the steering handlebar 13 of the motorcycle 10 as a saddle riding vehicle. The position light 20 has the longitudinal direction of the inner lens 28 disposed in a manner extending in the vehicle width direction at a lower portion inside the handlebar cover 14. The distance L1 from the LED 30 to the first reflecting surface 27a is set to be shorter than the distance L3 from the second reflecting surface 27c to the inner lens 28. In addition to this, an upper portion of the handlebar cover 14 (upper cover 21) with respect to the inner lens 28 is formed on the front face 21a as an inclined surface inclined upwardly toward the rear.

With this configuration, the front face 21a that is inclined upwardly toward the rear is disposed on the upper cover 21 at an upper side of the handlebar cover 14 with respect to the inner lens 28, and thus air resistance can be reduced. In addition, since the position light 20 can be disposed in a manner fitting the shape of the front face 21a, the handlebar cover 14 can be configured compactly.

Additionally, as illustrated in FIG. 2, the position light 20 is disposed ahead of the meter device 32 disposed inside the handlebar cover 14. The LED 30 and the first reflecting surface 27a are at least in part disposed within the range of the height H of the meter device 32.

With this configuration, since the meter device 32 can be disposed using the short distance L1 between the LED 30 and the first reflecting surface 27a, the handlebar cover 14 can be configured compactly.

In the above-described embodiment, as illustrated in FIG. 2, while the position light 20 includes the inner lens 28 and the outer lens 24 as the lenses, this should not be constructed in a limiting sense, and the position light 20 may include one lens. This one lens performs the surface emission with the lights reflected by the second reflecting surface 27c.

### [Reference Signs List]

- 10: Motorcycle (saddle riding vehicle)
- 13: Steering handlebar
- 14: Handlebar cover
- 20: Position light (light device)
- 21a: Front face (inclined surface)
- 27a: First reflecting surface
- 27c: Second reflecting surface
- 28: Inner lens (lens)
- 30: LED (light source)
- 32: Meter device

## Claims

1. A saddle riding vehicle comprising a light device, the light device comprising:
a light source (30);
a lens (28) having an elongated shape;
a first reflecting surface (27a) reflecting a light emitted from the light source (30); and a second reflecting surface (27c) reflecting a light reflected by the first reflecting surface (27a) onto the lens (28), the first reflecting surface (27a) having a curvature determined to cause the light from the light source (30) to make a diffusion range in a first direction wider than a diffusion range in a second direction, the first direction corresponding to a longitudinal direction of the elongated shape of the lens (28), the second direction corresponding to a direction perpendicular to the longitudinal direction of the elongated shape, the second reflecting surface (27c) irradiating the lens (28) with the light from respective portions of the first reflecting surface (27a) reflected in parallel to one another, wherein
the light device is disposed inside a handlebar cover (14) that covers a steering handlebar (13) of the saddle riding vehicle (10), the light device having the longitudinal direction of the lens (28) disposed in a manner extending in a vehicle width direction at a lower portion inside the handlebar cover (14), a distance L1 from the light source (30) to the first reflecting surface (27a) being set to be shorter than a distance L3 from the second reflecting surface (27c) to the lens (28), and an upper portion of the handlebar cover (14) with respect to the lens (28) being formed on an inclined surface (21a) inclined upwardly toward a rear.

2. A saddle riding vehicle according to claim 1, wherein a distance L2 from the first reflecting surface (27a) to the second reflecting surface (27c) is set to be longer than the distance L1 from the light source (30) to the first reflecting surface (27a).

3. A saddle riding vehicle according to claims 1 or 2,
wherein the light device reflects the light emitted rearward from the light source (30) to a direction perpendicular to the longitudinal direction of the lens (28) in a front view by the first reflecting surface (27a), and subsequently causes the light to be reflected forward by the second reflecting surface (27c) and to reach the lens (28).

4. A saddle riding vehicle according to claim 1, 2 or 3,
wherein the light device is disposed ahead of a meter device (32) disposed inside the handlebar cover (14), and
the light source (30) and the first reflecting surface (27a) are at least in part disposed within a range of a height H of the meter device (32).

## Patentansprüche

1. Sattelfahrzeug, umfassend einer Lichtvorrichtung, wobei die Lichtvorrichtung umfasst:
eine Lichtquelle (30);
eine Linse (28) mit einer länglichen Form;
eine erste reflektierende Oberfläche (27a), die ein von der Lichtquelle (30) emittiertes Licht reflektiert; und eine zweite reflektierende Oberfläche (27c), die ein von der ersten reflektierenden Oberfläche (27a) reflektiertes Licht auf die Linse (28) reflektiert, wobei die erste reflektierende Oberfläche (27a) eine Krümmung aufweist, die dazu bestimmt ist, zu bewirken, dass das Licht von der Lichtquelle (30) einen Streubereich in einer ersten Richtung breiter macht als einen Streubereich in einer zweiten Richtung, wobei die erste Richtung einer Längsrichtung der länglichen Form der Linse (28) entspricht,
wobei die zweite Richtung einer Richtung senkrecht zur Längsrichtung der länglichen Form entspricht, wobei die zweite reflektierende Oberfläche (27c) die Linse (28) mit dem Licht von jeweiligen Abschnitten der ersten reflektierenden Oberfläche (27a) bestrahlt, die parallel zueinander reflektiert werden, wobei die Lichtvorrichtung innerhalb einer Lenkstangenabdeckung (14) angeordnet ist, die eine Lenkstange (13) des Sattelfahrzeugs (10) abdeckt, wobei die Lichtvorrichtung die Längsrichtung der Linse (28) auf eine Weise angeordnet aufweist, dass sie sich in eine Fahrzeugbreitenrichtung an einem unteren Abschnitt innerhalb der Lenkstangenabdeckung (14) erstreckt, wobei ein Abstand L1 von der Lichtquelle (30) zu der ersten reflektierenden Oberfläche (27a) kürzer eingestellt ist als ein Abstand L3 von der zweiten reflektierenden Oberfläche (27c) zu der Linse (28), und ein oberer Abschnitt der Lenkstangenabdeckung (14) in Bezug auf die Linse (28) auf einer geneigten Oberfläche (21a) gebildet ist, die nach oben in Richtung eine Rückseite geneigt ist.

2. Sattelfahrzeug nach Anspruch 1,
wobei ein Abstand L2 von der ersten reflektierenden Oberfläche (27a) zu der zweiten reflektierenden Oberfläche (27c) länger eingestellt ist als der Abstand L1 von der Lichtquelle (30) zu der ersten reflektierenden Oberfläche (27a).

3. Sattelfahrzeug nach einem der Ansprüche 1 oder 2,
wobei die Lichtvorrichtung das von der Lichtquelle (30) nach hinten emittierte Licht in eine Richtung senkrecht zur Längsrichtung der Linse (28) in einer Vorderansicht durch die erste reflektierende Oberfläche (27a) reflektiert und anschließend bewirkt, dass das Licht von der zweiten reflektierenden Oberfläche (27c) nach vorne reflektiert wird und die Linse (28) erreicht.

4. Sattelfahrzeug nach einem der Ansprüche 1, 2 oder 3,
wobei die Lichtvorrichtung vor einer Messvorrichtung (32) angeordnet ist, die innerhalb der Lenkstangenabdeckung (14) angeordnet ist, und
die Lichtquelle (30) und die erste reflektierende Oberfläche (27a) mindestens teilweise innerhalb eines Bereichs einer Höhe H der Messvorrichtung (32) angeordnet sind.

## Revendications

1. Véhicule à selle comprenant un dispositif d'éclairage, le dispositif d'éclairage comprenant :
une source de lumière (30) ;
une lentille (28) présentant une forme allongée ;
une première surface réfléchissante (27a) réfléchissant une lumière émise par la source de lumière (30) ; et une seconde surface réfléchissante (27c) réfléchissant une lumière réfléchie par la première surface réfléchissante (27a) sur la lentille (28), la première surface réfléchissante (27a) présentant une courbure déterminée pour amener la lumière provenant de la source de lumière (30) à rendre une plage de diffusion dans une première direction plus large qu'une plage de diffusion dans une seconde direction, la première direction correspondant à une direction longitudinale de la forme allongée de la lentille (28),
la seconde direction correspondant à une direction perpendiculaire à la direction longitudinale de la forme allongée, la seconde surface réfléchissante (27c) irradiant la lentille (28) avec la lumière provenant de parties respectives de la première surface réfléchissante (27a) réfléchie parallèlement l'une à l'autre, dans lequel
le dispositif d'éclairage est disposé à l'intérieur d'un panneau couvrant de guidon (14) qui couvre un guidon de pilotage (13) du véhicule à selle (10), le dispositif d'éclairage présentant la direction longitudinale de la lentille (28) disposée d'une manière s'étendant dans une direction de la largeur du véhicule au niveau d'une partie inférieure à l'intérieur du panneau couvrant de guidon (14), une distance L1 de la source de lumière (30) à la première surface réfléchissante (27a) étant réglée pour être plus courte qu'une distance L3 de la seconde surface réfléchissante (27c) à la lentille (28), et une partie supérieure du panneau couvrant de guidon (14) par rapport à la lentille (28) étant formée sur une surface inclinée (21a) inclinée vers le haut vers un arrière.

2. Véhicule à selle selon la revendication 1,
dans lequel une distance L2 de la première surface réfléchissante (27a) à la seconde surface réfléchissante (27c) est réglée pour être plus longue que la distance L1 de la source de lumière (30) à la première surface réfléchissante (27a).

3. Véhicule à selle selon la revendication 1 ou 2,
dans lequel le dispositif d'éclairage réfléchit la lumière émise vers l'arrière de la source de lumière (30) dans une direction perpendiculaire à la direction longitudinale de la lentille (28) en vue de face par la première surface réfléchissante (27a), et amène ensuite la lumière à être réfléchie vers l'avant par la seconde surface réfléchissante (27c) et pour atteindre la lentille (28).

4. Véhicule à selle selon la revendication 1, 2 ou 3,
dans lequel le dispositif d'éclairage est disposé devant un dispositif de compteur (32) disposé à l'intérieur du panneau couvrant de guidon (14), et
la source de lumière (30) et la première surface réfléchissante (27a) sont au moins en partie disposées dans une plage d'une hauteur H du dispositif de compteur (32).
